(19) Europäisches Patentamt
European Patent Office
Office européen des brevets

(11) **EP 4 765 288 A1**

(12) # EUROPEAN PATENT APPLICATION
published in accordance with Art. 153(4) EPC

(43) Date of publication:
**24.06.2026 Bulletin 2026/26**

(21) Application number: **24865323.0**

(22) Date of filing: **03.09.2024**

(51) International Patent Classification (IPC):
***H01M 10/0565*** *(2010.01)* ***H01G 11/56*** *(2013.01)*
***H01G 11/60*** *(2013.01)* ***H01G 11/62*** *(2013.01)*
***H01M 6/18*** *(2006.01)* ***H01M 10/052*** *(2010.01)*
***H01M 10/054*** *(2010.01)*

(52) Cooperative Patent Classification (CPC):
**H01G 11/56; H01G 11/60; H01G 11/62; H01M 6/18; H01M 10/052; H01M 10/054; H01M 10/0565;**
Y02E 60/10

(86) International application number:
**PCT/JP2024/031627**

(87) International publication number:
**WO 2025/057821 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 JP 2023147685**
**08.04.2024 JP 2024062289**

(71) Applicants:
- **SUMITOMO CHEMICAL COMPANY, LIMITED**
  **Tokyo 103-6020 (JP)**
- **Kyoto University**
  **Kyoto-shi, Kyoto 606-8501 (JP)**

(72) Inventors:
- **NAKAJIMA, Hideto**
  **Niihama-shi, Ehime 792-8521 (JP)**
- **KIM, Dongwook**
  **Kyoto-shi, Kyoto 606-8501 (JP)**

(74) Representative: **Vossius & Partner Patentanwälte Rechtsanwälte mbB**
**Siebertstraße 3**
**81675 München (DE)**

(54) **ELECTROLYTE COMPOSITION AND BATTERY**

(57) The present disclosure provides an electrolyte composition, including: a polymer (A) that has an anionic functional group and an alkali metal ion as a counter cation of the anionic functional group, wherein the dissociation energy between lithium ions and the anionic functional group is 150 kcal/mol or more; an ionic compound; and a non-ionic organic solvent.

***Fig.1***

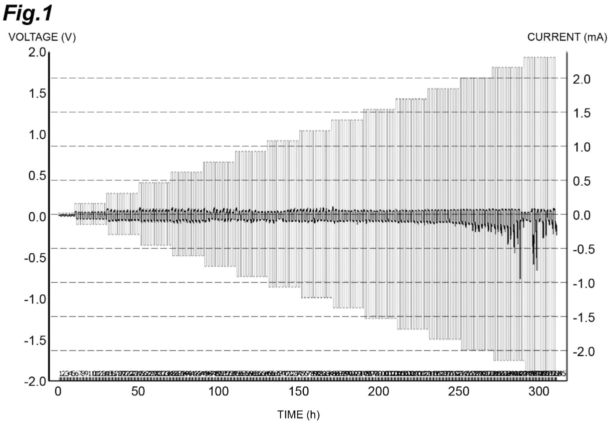




EP 4 765 288 A1

## Description

### Technical Field

The present disclosure relates to an electrolyte composition and a battery.

### Background Art

Batteries that perform charging and discharging accompanying movement of metal ions between a positive electrode and a negative electrode, such as lithium-ion batteries, have been actively researched due to being high capacity. As electrolytes for lithium-ion batteries and the like, solutions of lithium salts including an organic solvent or an ionic liquid are known. However, from the viewpoints of safety and processability, research on solid electrolytes, polymer electrolytes, and the like has been advanced (Patent Literature 1 or 2). In addition, besides lithium-ion batteries, research has also been advanced on batteries using other alkali ions such as sodium and potassium, which have a larger abundance than lithium.

### Citation List

### Patent Literature

[Patent Literature 1] International Publication No. WO 2007/125845
[Patent Literature 2] Japanese Unexamined Patent Application Publication No. 2021-88695

### Summary of Invention

### Technical Problem

Polymer electrolytes, compared to solid electrolytes, generally tend to have lower contact resistance with an electrode because they easily adhere to the electrode. However, as a result of diligent studies by the present inventors, it has been found that in a polymer electrolyte including a polymer having a functional group that becomes a counter anion of an alkali metal ion, depending on the functional group, the resistance of the functional group itself is high, and there is room for improvement. In addition, it would be useful if the resistance between the electrode and the electrolyte can be reduced by this improvement.

The present disclosure has been made in view of the above-described circumstances, and an object thereof is to provide an electrolyte composition capable of flowing a sufficiently large current at a low voltage, and a battery including the electrolyte composition.

### Solution to Problem

The present disclosure includes the following embodiments.

[1] An electrolyte composition, including:

a polymer (A) that has an anionic functional group and an alkali metal ion as a counter cation of the anionic functional group, wherein the dissociation energy between lithium ions and the anionic functional group is 150 kcal/mol or more;
an ionic compound; and
a non-ionic organic solvent.

[2] The electrolyte composition of [1], wherein a transference number of the alkali metal ion at 25°C is 0.5 or more.
[3] The electrolyte composition of [1] or [2], wherein the alkali metal ion includes a lithium ion or a sodium ion.
[4] The electrolyte composition of any one of [1] to [3], wherein the non-ionic organic solvent includes one or more solvents selected from the group consisting of a carbonate-based solvent, an ether-based solvent, a fluorine-based solvent, a nitrile-based solvent, a lactone-based solvent, a phosphate ester-based solvent, and a sulfone-based solvent.
[5] The electrolyte composition of any one of [1] to [4], wherein the anionic functional group includes one or more

groups selected from the group consisting of an alkali-metallized sulfonic acid group and an alkali-metallized carboxylic acid group.

[6] The electrolyte composition of any one of [1] to [5], wherein the polymer (A) is one that does not hydrolyze in air.

[7] A battery, including the electrolyte composition of any one of [1] to [6].

## Advantageous Effects of Invention

According to the contents of the present disclosure, it is possible to provide an electrolyte composition capable of flowing a sufficiently large current at a low voltage, and a battery including the electrolyte composition.

## Brief Description of Drawings

[FIG. 1] FIG. 1 is a diagram showing a result of measurement of a maximum direct current density using the electrolyte composition of Example 4.

[FIG. 2] FIG. 2 is a diagram showing a result of measurement of a maximum direct current density using the electrolyte composition of Comparative Example 1.

## Description of Embodiments

An electrolyte composition according to an embodiment of the present disclosure includes a polymer (A) having an anionic functional group and an alkali metal ion as a counter cation of the anionic functional group, an ionic compound, and a non-ionic organic solvent. In the polymer (A), a dissociation energy between lithium ions and an anionic functional group is 150 kcal/mol or more. Hereinafter, "the dissociation energy between lithium ions and the anionic functional group" is also simply referred to as "dissociation energy". Note that the dissociation energy is an energy when an alkali metal ion and an anionic functional group of the polymer dissociate from each other. In addition, a polymer having an anionic functional group and an alkali metal ion as a counter cation of the anionic functional group is also referred to as a polymer (A). Since the electrolyte composition of the present embodiment has low resistance as described above, movement of Li cations at an interface between an electrode and an electrolyte also becomes easy, and the electrolyte composition can be driven at a sufficiently practical voltage. In addition, in the electrolyte composition of the present embodiment, selective transference of lithium ions also tends to be improved.

The electrolyte composition can flow a sufficiently large current even at a low voltage by including an ionic compound and a non-ionic organic solvent while using a polymer (A) having an anionic functional group that has a large dissociation energy and strongly binds an alkali metal ion. Although the reason why such an effect is obtained is not certain, the present inventors presume as follows. That is, in a non-ionic organic solvent, although the anionic functional group of the polymer (A) can strongly bind an alkali metal ion, by blending an ionic compound, a cation portion of the ionic compound interacts with the anionic functional group, and an anion portion of the ionic compound interacts with the alkali metal ion. Hereby, a binding force that the alkali metal ion feels in the electrolyte composition is weakened, and conductivity of the alkali metal ion in the electrolyte can be improved. By such an action, the resistance of the electrolyte composition can be reduced. Note that as an anionic functional group with a small dissociation energy, for example, a sulfonylimide group or the like can be considered, but synthesis of a polymer having such a functional group often requires a multi-step process and tends to be expensive. Therefore, the technology of the present disclosure, which can obtain a battery with sufficient performance by using a polymer having an anionic functional group with a large dissociation energy, is useful. In the electrolyte composition of the present embodiment, resistance between an electrode and an electrolyte interface is improved.

In the present specification, in any case, examples of a "substituent" can include both an organic group and a group other than an organic group (an inorganic group). In the present specification, an "organic group" refers to a group having a chemical structure obtained by removing at least one hydrogen atom from an organic compound. In the present specification, when referring to an "organic group", in any case, regardless of a valence of the organic group, a hydrocarbon group or a group in which a part of carbon atoms of a hydrocarbon group is replaced by a heteroatom, a group in which at least one or more hydrogen atoms of a hydrocarbon group or a group in which a part of carbon atoms of a hydrocarbon group is replaced by a heteroatom are substituted by a substituent, and the like can be exemplified. When the organic group has a ring structure, the ring may be either a heterocyclic ring or a carbocyclic ring, and may be either a monocyclic ring or a condensed ring. In the present specification, in any case, the hydrocarbon group can be exemplified by both an aliphatic hydrocarbon group and an aromatic hydrocarbon group. In the present specification, in any case, the aliphatic hydrocarbon group can be exemplified by any of a linear hydrocarbon group, a branched hydrocarbon group, and a cyclic hydrocarbon group. In addition, in the present specification, in any case, the hydrocarbon group can be exemplified

by both a saturated hydrocarbon group and an unsaturated hydrocarbon group. In the present specification, an aromatic hydrocarbon group shall be a hydrocarbon group having an aromatic portion such as a benzene ring, and may have an aliphatic portion. In addition, in the present specification, a cyclic hydrocarbon group shall be a hydrocarbon group having an aliphatic carbocyclic portion, and may have a linear or branched aliphatic portion. The heteroatom that substitutes for the carbon atom is not particularly limited, but examples thereof include a boron atom, an oxygen atom, a nitrogen atom, a silicon atom, a phosphorus atom, and a sulfur atom. Specifically, the organic group may include a linking group including a heteroatom such as -O-(ether bond), -S- (thioether bond), a sulfonyl group, a sulfinyl group, a secondary amino group, and a tertiary amino group. In the present specification, in any case, specific examples of the organic group include a substituted or unsubstituted hydrocarbon group, a group having a chemical structure formed by substituting one or more carbon atoms (methylene groups) in a hydrocarbon group with a linking group including a heteroatom such as -O- (ether bond), -S- (thioether bond), - C(=O)-, -C(=O)O-, or -C(=O)NR- (R is a monovalent organic group) (the linking group may be a divalent linking group), or a group in which a hydrogen atom of the group is substituted by a substituent such as a halogen atom, a group having a heterocyclic ring, and the like. In the present specification, in any case, examples of the inorganic group can include both an electron-withdrawing group and an electron-donating group, and specific examples thereof include a halogen atom, $-NH_2$, $-NH_3^+$, -CN, a sulfonic acid group and a salt or ester thereof, $-NO_2$, and the like.

< Polymer Having Ability to Preferentially Conduct Alkali Metal Ions>

The polymer (A) may be a polymer having an ability to preferentially conduct alkali metal ions. The polymer having an ability to preferentially conduct alkali metal ions (hereinafter, also simply referred to as a polymer) may be one that satisfies at least one of the following conditions (A) and (B). The polymer may be simply referred to as a polymer having an ability to conduct alkali metal ions.

(A) When a transference number of the alkali metal ion at room temperature (25°C) is measured for a composition including 33% by mass of the polymer and 67% by mass of a non-ionic plasticizer, the transference number of the alkali metal ion is 0.4 or more.

(B) When a transference number of the alkali metal ion at room temperature (25°C) is measured for a composition including 31.9% by mass of the polymer, an alkali metal salt, and the remaining total amount of a non-ionic plasticizer, and having an alkali metal ion concentration of 0.3 mol/L, the transference number of the alkali metal ion is 0.4 or more.

For (A) and (B), the transference number of the alkali metal ion may be, for example, 0.5 or more, 0.6 or more, or 0.7 or more. The transference number of the alkali metal ion may be, for example, 0.9 or less.

The alkali metal ion included in the composition may be a counter cation of an anionic functional group of the polymer.

Examples of the non-ionic plasticizer include at least one of an organic solvent and other resins such as a fluorine-based resin.

The organic solvent may be an aprotic solvent. The aprotic solvent may be at least one selected from the group consisting of a carbonate-based solvent, a fluorine-based solvent, and an ether-based solvent. The organic solvent may be a mixed solvent of ethylene carbonate and propylene carbonate (1:1 by volume ratio).

As the fluorine-based resin, a resin having a carbon chain as a main chain is preferable. The carbon chain may be one formed by radical polymerization of an ethylenically unsaturated group. The fluorine-based resin may be PVDF-HFP.

The polymer (A) has an anionic functional group in which the dissociation energy between lithium ions and the anionic functional group is 150 kcal/mol or more. Examples of a functional group including such an anionic functional group include an alkali-metallized group. The alkali-metallized group may include one or more groups selected from the group consisting of an alkali-metallized sulfonic acid group, an alkali-metallized carboxylic acid group, and an alkali-metallized phenolic hydroxyl group.

Here, in the present specification, an alkali-metallized group refers to a group in which an anionic functional group, which is a conjugate base of an acid form of the group, forms a salt with an alkali metal ion. Specific examples thereof include an alkali-metallized sulfonic acid group, an alkali-metallized carboxylic acid group, and an alkali-metallized phenolic hydroxyl group. An alkali-metallized sulfonic acid group refers to a $-SO_3A$ group ($[-SO_3]^-A^+$ group) in which H of a sulfonic acid group ($-SO_3H$ group) is substituted with an alkali metal element A. An alkali-metallized carboxylic acid group refers to a -COOA group ($[-COO]^-A^+$ group) in which H of a carboxylic acid group (-COOH group) is substituted with an alkali metal element A. An alkali-metallized phenolic hydroxyl group refers to an -OA group ($-O^-A^+$ group) in which H of a -OH group, which is a phenolic hydroxyl group, is substituted with an alkali metal element A.

The structure of the polymer (A) is not particularly limited, but examples thereof include one having a carbon chain as a main chain, and the carbon chain may be one formed by radical addition polymerization of a monomer having an ethylenically unsaturated group.

The alkali metal element A may include at least one selected from the group consisting of lithium, sodium,

potassium, rubidium, and cesium, may include at least one selected from the group consisting of lithium, sodium, and potassium, may include at least one of lithium and sodium, and may include lithium.

A content of one type of alkali metal element among alkali metal elements included in the polymer (A) may be, for example, 80 mol% or more, 85 mol% or more, or 90 mol% or more. The content of one type of alkali metal element among the alkali metal elements included in the polymer may be, for example, 100 mol%, but may be 98 mol% or less, or 95 mol% or less. The one type of alkali metal element may be potassium, sodium, or lithium, may be sodium or lithium, and may be lithium.

The structural unit (A) may include at least one of a structural unit represented by the following formula (A1) and a structural unit represented by (A2).

[Chem. 1]

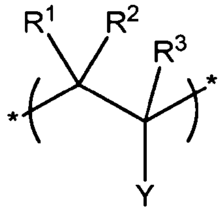

(A1)

(In formula (A1), Y is an alkali-metallized monovalent group. $R^1$ to $R^3$ are each independently a hydrogen atom or a monovalent substituent, or one of $R^1$ and $R^2$ forms a ring together with $R^3$, and the other is a hydrogen atom or a monovalent substituent. $R^1$ to $R^3$ may have the above-described alkali-metallized group.)

[Chem. 2]

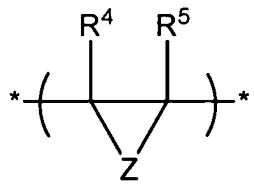

(A2)

(In formula (A2), Z is an alkali-metallized divalent group. $R^4$ and $R^5$ are each independently a hydrogen atom or a monovalent substituent, or $R^4$ and $R^5$ form a ring together. $R^4$ and $R^5$ may have the above-described alkali-metallized group.)

Note that a structure excluding $R^1$ to $R^3$ and Y in formula (A1), and a structure excluding $R^4$, $R^5$, and Z in formula (A2) are also simply referred to as an ethylene unit.

In formula (A1), Y may include one or more groups selected from the group consisting of an alkali-metallized sulfonylimide group, an alkali-metallized sulfonic acid group, an alkali-metallized carboxylic acid group, and an alkali-metallized phenolic hydroxyl group, and may include one or more groups selected from the group consisting of an alkali-metallized sulfonic acid group and an alkali-metallized carboxylic acid group. One or two or more types of functional groups may be adopted as Y.

In formula (A1), the monovalent substituent as $R^1$ to $R^3$ may be a monovalent organic group. When $R^1$ to $R^3$ are monovalent substituents, examples of the substituent include a monovalent organic group. The number of carbon atoms that the monovalent organic group has may be, for example, 1 to 20, 1 to 15, 1 to 10, 1 to 5, or 1 to 3. At least one of $R^1$ to $R^3$ may be a hydrogen atom, and all of them may be hydrogen atoms.

In formula (A1), when one of $R^1$ and $R^2$ forms a ring together with $R^3$, $R^1$ or $R^2$ and $R^3$ form a divalent substituent that respectively bonds with the two carbons of the ethylene unit of formula (A1). In formula (A2), when $R^4$ and $R^5$ form a ring together, $R^4$ and $R^5$ form a divalent substituent that respectively bonds with the two carbons of the ethylene unit of formula (A1). These rings may be either a carbocyclic ring or a heterocyclic ring. The number of ring members of these rings may be, for example, 4 to 10, 5 to 8, or 5 or 6. A substituent may be bonded to a carbon atom or a heteroatom that is a ring

member.

In formula (A1), when Y includes an alkali-metallized carboxylic acid group (-COOA group, where A is an alkali metal), Y may be a - COOA group itself, but may be a monovalent organic group having a - COOA group. When Y is a monovalent organic group, the number of carbon atoms that the organic group has may be, for example, 1 to 20, 1 to 15, 1 to 10, 1 to 5, or 1 to 3. The monovalent organic group may have one or a plurality of -COOA groups, and may have one -COOA group. Y may have an electron-withdrawing group such as a halogen atom in addition to the -COOA group.

In formula (A1), Y may be a group represented by $-R^9$-COOA. Here, $R^9$ is a divalent organic group or a covalent bond. The number of carbon atoms that the divalent organic group has may be, for example, 1 to 19, 1 to 14, 1 to 9, 1 to 4, or 1 or 2.

In formula (A1), when Y has an alkali-metallized phenolic hydroxyl group, Y may be, for example, a group represented by $R^{10}$-$Y^2$. Here, $R^{10}$ is a divalent substituent (linking group). $Y^2$ may be a group having one or a plurality of -OA groups (A is an alkali metal element) directly bonded to a carbon atom that is a ring member of an aromatic ring such as a benzene ring, a naphthalene ring, or an anthracene ring. Another ring structure may be condensed to the aromatic ring. For example, $Y^2$ may have a group represented by any one of the following formulas (A21) to (A26).

[Chem. 3]

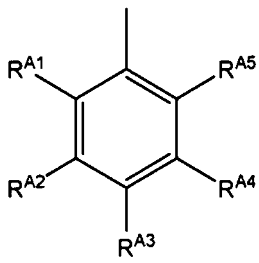

(A21)

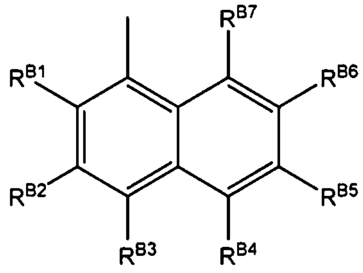

(A22)

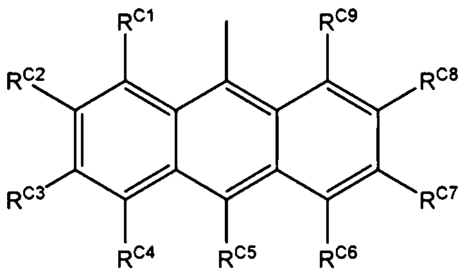

(A23)

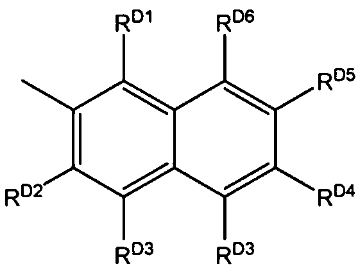

(A24)

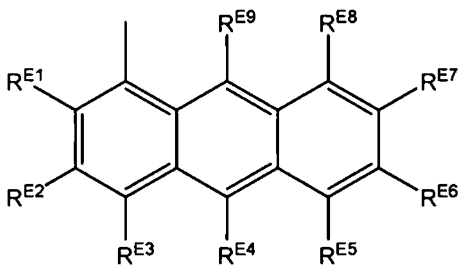

(A25)

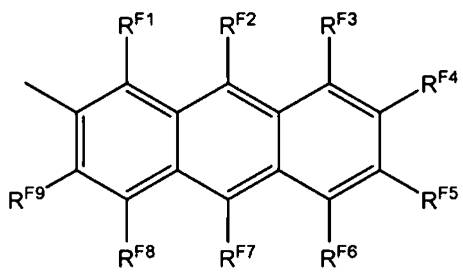

(A26)

(In formula (A21), at least one of the $R^{A1}$ to $R^{A5}$ groups is an -OA group, and the rest are a hydrogen atom or a monovalent substituent. The $R^{A3}$ group may be an -OA group.

In formula (A22), at least one of the $R^{B1}$ to $R^{B7}$ groups is an -OA group, and the rest are a hydrogen atom or a monovalent substituent. At least one of the $R^{B3}$ to $R^{B6}$ groups may be an -OA group.

In formula (A23), at least one of the $R^{C1}$ to $R^{C9}$ groups is an -OA group, and the rest are a hydrogen atom or a monovalent substituent. At least one of the $R^{C2}$ to $R^{C8}$ groups may be an -OA group.

In formula (A24), at least one of the $R^{D1}$ to $R^{D6}$ groups is an -OA group, and the rest are a hydrogen atom or a monovalent substituent. At least one of the $R^{D3}$ to $R^{D6}$ groups may be an -OA group.

In formula (A25), at least one of the $R^{E1}$ to $R^{E9}$ groups is an -OA group, and the rest are a hydrogen atom or a monovalent substituent. At least one of the $R^{E2}$ to $R^{E8}$ groups may be an -OA group.

In formula (A26), at least one of the $R^{F1}$ to $R^{F9}$ groups is an -OA group, and the rest are a hydrogen atom or a monovalent substituent. At least one of the $R^{F1}$ to $R^{F9}$ groups may be an -OA group.)

The group represented by formulas (A21) to (A26) may have 1 to 3 -OA groups, may have 1 or 2 -OA groups, and may have one -OA group.

In formulas (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of F, Cl, Br, and I.

In addition, in formulas (A21) to (A26), the monovalent substituent may be an organic group having 1 to 20 carbon atoms. The number of carbon atoms that the organic group has may be, for example, 1 to 15, 1 to 10, 1 to 5, or 1 to 3.

The group represented by formulas (A21) to (A26) may have 1 to 3 -OA groups, may have 1 or 2 -OA groups, and may have one -OA group.

In formulas (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of F, Cl, Br, and I.

In addition, in formulas (A21) to (A26), the monovalent substituent may be an organic group having 1 to 20 carbon atoms. The number of carbon atoms that the organic group has may be, for example, 1 to 15, 1 to 10, 1 to 5, or 1 to 3.

$R^{10}$ may be a divalent organic group. The number of carbon atoms that the divalent organic group has may be, for example, 1 to 15, 1 to 10, 1 to 8, or 1 to 5. $R^{10}$ may have a heterocyclic ring, and may have a ring having an imide group.

When Y is an alkali-metallized sulfonic acid group, examples of Y include a group represented by the following formula (A3).

[Chem. 4]

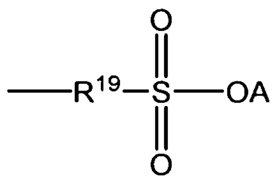

(A3)

(In formula (A3), $R^{19}$ is a covalent bond or a divalent organic group. A is an alkali metal element.)

In formula (A3), the number of carbon atoms that the divalent organic group has may be, for example, 1 to 20, 1 to 15, 1 to 10, 1 to 5, or 1 to 3.

In formula (A3), examples of the alkali-metallized sulfonic acid group include $-SO_3A$, $-CH_2-SO_3A$, $-C_6H_4-SO_3A$, and the like.

In formula (A2), Z is bonded to the two carbons of the ethylene unit to form a ring. The ring may be either a carbocyclic ring or a heterocyclic ring. In addition, the ring may be either aliphatic or aromatic. Examples of the heterocyclic ring include a ring having an imide group such as a maleimide ring. To the ring, for example, one or more groups selected from the group consisting of an alkali-metallized sulfonic acid group, an alkali-metallized carboxylic acid group, and an alkali-metallized phenolic hydroxyl group may be bonded. The number of carbon atoms that Z has may be, for example, 1 to 20, 1 to 15, 2 to 10, or 3 to 8.

The polymer (A) may have an anionic functional group with a dissociation energy of, for example, 150 to 300 kcal/mol, 155 to 275 kcal/mol, 157 to 250 kcal/mol, or 160 to 200 kcal/mol.

The dissociation energy may be one calculated by quantum mechanical calculation. For example, structure optimization is performed using Gaussian16 and M06/6-31G* as a combination of a functional and a basis set. Structure optimization is performed for each of an alkali metal cation (M+), an anionic functional group (Anion-), and a structure (MA) in which both interact, and an energy that the optimized structure has is determined. Subsequently, the dissociation energy was determined by the following formula using the total energy calculated by structure optimization for the energy that each has. Let the energy that $M^+$ has be $E_{M+}$, the energy that Anion- has be $E_{Anion-}$, and the energy that MA has be $E_{MA}$. Note that $E_{Anion-}$ may be calculated using a corresponding anion instead of the anionic functional group itself. As an anion

corresponding to the anionic functional group, when a bonding part of the functional group is a carbon atom or a heteroatom of an aromatic ring, an anion in which hydrogen is bonded to the atom that is the bonding part may be used. For example, when the anionic functional group is $-Ph-SO_3-$ (phenylsulfonic acid group), a benzenesulfonic acid anion may be used as the corresponding anion. At this time, when determining the dissociation energy with a lithium ion, lithium benzenesulfonate is used as a compound corresponding to MA. When the bonding part of the anionic functional group is other than an aromatic ring, an anion in which a methyl group is bonded to the bonding part may be used as the corresponding anion. For example, for $-O^-$ (hydroxyl group), $CH_3O-$ may be used. At this time, when determining the dissociation energy with a lithium ion, $CH_3OLi$ is used as a compound corresponding to MA.

$$\text{Dissociation energy} = E_{M+} + E_{Anion-} - E_{MA}$$

The dissociation energy of each functional group determined by the above calculation is as described in Table 1 below.

[Table 1]

| Number | 1 | 2 | 3 | 4 | 5 | 6 | 7 |
|---|---|---|---|---|---|---|---|
| Structure | 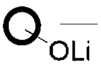 | 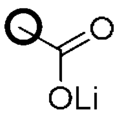 | 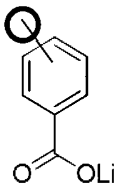 | 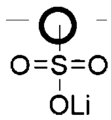 | 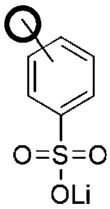 | 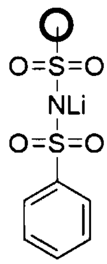 | 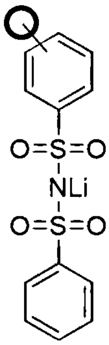 |
| Dissociation Energy [kcal/mol] | 196.6 | 188.4 | 167.8 | 167.3 | 162.8 | 154.0 | 152.1 |

A portion represented by a circle is a bonding part. In anionic functional groups 3, 5, and 7, a bonding site is any of an ortho position, a meta position, and a para position of an aromatic ring.
In anionic functional groups 1, 2, 4, and 6, calculation was performed assuming that the portion of the circle is a methyl group.
In anionic functional groups 3, 5, and 7, calculation was performed assuming that a hydrogen atom is bonded to a carbon atom of a benzene ring.

The polymer (A) may have, in addition to an anionic functional group in which an energy when a lithium ion and the anionic functional group dissociate is 150 kcal/mol or more, at least one of an anionic functional group (also referred to as a second anionic functional group) that has an alkali metal ion as a counter cation and has a dissociation energy of less than 150 kcal/mol, and a functional group having a function as an anion receptor. These functional groups may be included in the same structural unit as the structural unit (A), but may be included in a different structural unit. A structural unit having a functional group that functions as an anion receptor is also referred to as a structural unit (B). In addition, the electrolyte composition of the present embodiment may include a polymer (also referred to as a polymer (B)) that does not have an anionic functional group with a dissociation energy of 150 kcal/mol or more, and has at least one of an anionic functional group with a dissociation energy of less than 150 kcal/mol and a functional group having a function as an anion receptor.

Examples of the second anionic functional group include an alkali-metallized sulfonylimide group and the like. An alkali-metallized sulfonylimide group refers to a $-SO_2-NA-SO_2-$ group ($[-SO_2-N-SO_2-]-A^+$ group) in which H of a sulfonylimide acid group ($-SO_2-NH-SO_2-$group) is substituted with an alkali metal element A.

When the polymer (A) has a structural unit (B), the structural unit (B) has a function as an anion receptor. An anion receptor refers to a chemical species that captures an anion by forming an electrostatic interaction, a hydrogen bond, an acid-base complex, or the like with the anion. The structural unit (B) captures a counter anion of an alkali metal ion in an alkali metal salt and promotes dissociation between the counter anion and the alkali metal ion. Hereby, the mobility of the alkali metal ion increases more. On the other hand, since the counter anion is captured by the polymer via the structural unit (B), the mobility of the counter anion decreases. As a result, it is considered that the transference number of the alkali metal

ion is improved. In addition, since the mobility of the alkali metal ion increases, the conductivity of the alkali metal ion also tends to improve. Low-molecular-weight chemical species (compounds and the like) that function as anion receptors are known, and examples thereof include compounds described in U.S. Patent No. 6,022,643, U.S. Patent No. 5,705,689, U.S. Patent No. 6,120,941, and the like.

A functional group having a function as an anion receptor may be one having Lewis acidity. In this case, the functional group can capture an anion by accepting a non-covalent electron pair of the anion and forming an acid-base complex. Examples of such a functional group include a functional group having an electron-deficient atom. Note that an electron-deficient atom refers to an atom that is covalently bonded to another atom but whose outermost shell electrons do not form an octet. Examples of the electron-deficient atom include an atom belonging to Group 13 of the periodic table, and more specifically, may be at least one of aluminum and boron, and may be boron.

As a functional group having a function as an anion receptor, a group having an azaether moiety may be used. A group having an azaether moiety is a group having an azaether compound as a substituent, and an azaether compound is a compound in which -O- of an ether compound is replaced with -NRE- (where RE is a hydrogen atom or an organic group). The azaether moiety may be either a linear azaether moiety or a cyclic azaether moiety, and may have both a linear azaether moiety and a cyclic azaether moiety. A group having an azaether moiety may have an electron-withdrawing group, for example, in a hydrocarbon moiety or the like.

The structural unit (B) may include at least one type of structural unit represented by the following formula (B). Note that a structure excluding $R^{11}$ to $R^{13}$ and W in formula (B) is also simply referred to as an ethylene unit.

[Chem. 5]

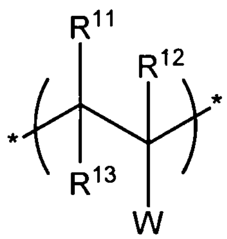

(B)

(In formula (B), W is a functional group having a function as an anion receptor, $R^{11}$ to $R^{13}$ are each independently a hydrogen atom or a monovalent substituent, or one of $R^{11}$ and $R^{13}$ forms a ring together with $R^{12}$, and the other is a hydrogen atom or a monovalent substituent. * represents a position where the structural unit (B) bonds to another structural unit. One or more of $R^{11}$ to $R^{13}$ may be a hydrogen atom, and all of them may be hydrogen atoms.)

In formula (B), when $R^{11}$ to $R^{13}$ are monovalent substituents, the monovalent substituent may be a monovalent organic group. The number of carbon atoms that the organic group has may be, for example, 1 to 20, 1 to 15, 1 to 10, 1 to 5, or 1 to 3.

In formula (B), when $R^{11}$ to $R^{13}$ are monovalent substituents, the monovalent substituent may have an electron-withdrawing group, and may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

In formula (B), when one of $R^{11}$ and $R^{13}$ forms a ring together with $R^{12}$, $R^{11}$ or $R^{12}$ and $R^{13}$ form a divalent substituent that respectively bonds with the two carbons of the ethylene unit of formula (B). These rings may be either a carbocyclic ring or a heterocyclic ring. The number of ring members of these rings may be, for example, 4 to 10, 5 to 8, or 5 or 6. A substituent may be bonded to a carbon atom or a heteroatom that is a ring member.

In formula (B), W preferably has a group represented by the following formula (B1).

[Chem. 6]

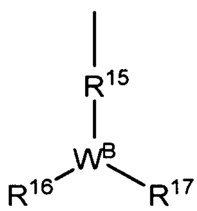

(B1)

(In formula (B1), $W^B$ is an atom belonging to Group 13 of the periodic table, $R^{15}$ is a covalent bond or a divalent organic group, and $R^{16}$ and $R^{17}$ are each independently a hydrogen atom, a -OH group, a halogen atom, or a monovalent organic group, or form a ring together. $R^{16}$ and $R^{17}$ may be the same group or different groups.)

In formula (B1), $W^B$ may be at least one of an aluminum atom and a boron atom, and may be a boron atom.

In formula (B1), when $R^{15}$ is a divalent organic group, the number of carbon atoms that the divalent organic group has may be, for example, 1 to 20, 1 to 15, 1 to 10, 1 to 5, or 1 to 3. When $R^{15}$ is a divalent organic group, as the organic group, $R^{15}$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group. $R^{15}$ may be a covalent bond.

In formula (B1), when $R^{16}$ or $R^{17}$ is a halogen atom, $R^{16}$ or $R^{17}$ may be any of a fluorine atom, a chlorine atom, a bromine atom, and an iodine atom, and may be a fluorine atom.

In formula (B1), when $R^{16}$ or $R^{17}$ is a monovalent organic group, the number of carbon atoms that the monovalent organic group has may be, for example, 1 to 20, 1 to 15, 1 to 10, 1 to 5, or 1 to 3. $R^6$ or $R^7$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group.

The group represented by formula (B1) may be a group represented by the following formula (B1a) or a group represented by the following formula (B1b).

[Chem. 7]

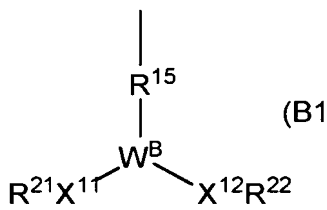

(B1a)

(In formula (B1a), $R^{15}$ is a covalent bond or a divalent organic group, and $X^{11}$ and $X^{12}$ are each independently an oxygen atom or a covalent bond. When $X^{11}$ is a covalent bond, $R^{21}$ is a hydrogen atom, a halogen atom, or a monovalent organic group. When $X^{11}$ is an oxygen atom, $R^{21}$ is a hydrogen atom or a monovalent organic group. When $X^{12}$ is a covalent bond, $R^{22}$ is a hydrogen atom, a halogen atom, or a monovalent organic group. When $X^{12}$ is an oxygen atom, $R^{22}$ is a hydrogen atom, a halogen atom, or a monovalent organic group. When $X^{11}$ and $X^{12}$ are each an oxygen atom, they may be an oxygen atom forming an ether bond.)

[Chem. 8]

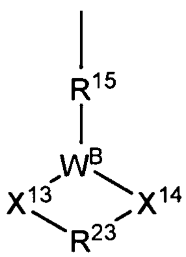

(B1b)

(In formula (B1b), $R^{15}$ is a covalent bond or a divalent organic group, $X^{13}$ and $X^{14}$ are each an oxygen atom or a covalent bond, and $R^{23}$ is a divalent organic group.)

In formula (B1a), when $R^{21}$ or $R^{22}$ is a monovalent organic group, the monovalent organic group may be a monovalent hydrocarbon group or a monovalent halogen-substituted hydrocarbon group. The number of carbon atoms that the monovalent organic group has may be, for example, 1 to 20, 1 to 15, 1 to 10, 1 to 5, or 1 to 3. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group. When $R^{21}$ or $R^{22}$ is a halogen atom, the halogen atom may be a fluorine atom.

In formula (B1a), $R^{21}$ and $R^{22}$ are each independently -F, $-CH_3$, $-C_2H_5$, $-C_3H_7$, $-C_6H_5$ (phenyl group), $-C_6H_nF_{5-n}$ (n is an integer of 0 to 4, and may be an integer of 0 to 3), $-CF_3$, $-CH_2CF_3$, $-CH_2CF_3CF_7$, $-CH(CF_3)_2$, $-C(CF_3)_2-C_6H_5$, or $-C(CF_3)_3$, $-C_6H_n(CF_3)_{5-n}$ (n is an integer of 0 to 4, and may be 1 or 2).

In formula (B1b), the number of carbon atoms that the divalent organic group has may be, for example, 1 to 20, 1 to 15, 2 to 10, or 3 to 8. The divalent organic group may be a hydrocarbon group or a halogen-substituted hydrocarbon group. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group.

In formula (B1b), examples of $R^{23}$ include $-C_2H_4-$, $-C_3H_6-$, $-C_4H_8-$, $-C_5H_{10}-$, $-C_6H_{12}-$, $-C_7H_{14}-$, $-C_8H_{16}-$, $-C_9H_{18}-$, $-C_{10}H_{20}-$, and the like, and those in which these hydrogen atoms are partially or entirely substituted with fluorine. More specifically, $R^{23}$ may be $-C(CH_3)_2-C(CH_3)_2-$.

As an anionic functional group with a dissociation energy of less than 150 kcal/mol, for example, it may be included in a structural unit having a structure represented by the following formula (A4).

[Chem. 9]

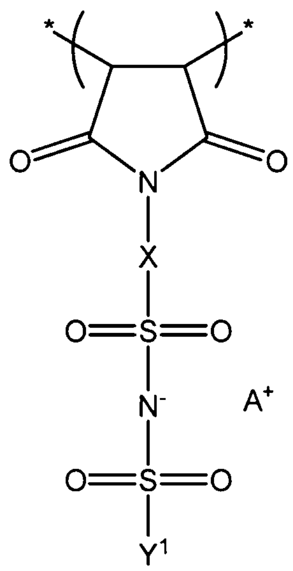

(A4)

(In formula (A4), X is a divalent organic group having 1 to 20 carbon atoms, $Y^1$ is a halogen atom or a monovalent organic group having 1 to 20 carbon atoms, $A^+$ is an alkali metal ion, and * represents a position where the structural unit (A4) bonds to another structural unit.)

In formula (A4), the number of carbon atoms that X has may be, for example, 1 to 15, 2 to 10, or 3 to 8. The hydrocarbon group as X may be a phenylene group, an alkylene group having 1 to 8 carbon atoms, a polyoxyalkylene group, or a group in which a part or all of hydrogen atoms bonded to carbon atoms thereof are substituted with a halogen atom such as a fluorine atom, and may be a substituted phenylene group substituted with a phenylene group or an alkyl group, a halogen atom, an electron-withdrawing group, or the like.

In formula (A4), when $Y^1$ is a monovalent organic group, the number of carbon atoms that $Y^1$ has may be, for example, 1 to 15, 1 to 10, 1 to 8, 1 to 5, or 1 to 3. The hydrocarbon group as $Y^1$ may be a phenyl group, an alkyl group having 1 to 5 carbon atoms, or one in which a part or all of hydrogen atoms bonded to carbon atoms of these groups are substituted with a halogen atom such as a fluorine atom, may be a fluorinated alkyl group having 1 to 5 carbon atoms, and may be a fluorinated alkyl group having 1 to 3 carbon atoms such as a trifluoromethyl group. The fluorinated alkyl group may be a perfluorinated alkyl group. When $Y^1$ is a halogen atom, the halogen atom may be a fluorine atom or a chlorine atom, and may be a fluorine atom.

The polymer (A) may have a structural unit (also referred to as a structural unit (C)) that includes neither an anionic functional group having an alkali metal ion as a counter cation nor a functional group having a function as an anion receptor. Note that the polymer (B) may also have a structural unit (C). Examples of the structural unit (C) include a structural unit represented by the following formula (C).

[Chem. 10]

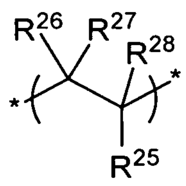

(C)

(In formula (C), $R^{25}$ is a hydrogen atom or a monovalent substituent, $R^{26}$ to $R^{28}$ are each independently a hydrogen atom or a monovalent substituent, or one of $R^{26}$ and $R^{27}$ is a hydrogen atom or a monovalent substituent, and the other forms a ring together with $R^{28}$. * is a bonding portion of the structural unit (C) with another structural unit.)

In formula (C), $R^{25}$ may be a monovalent organic group. The monovalent organic group may be a group represented by $-Z^1-R^{29}$. The number of carbon atoms that $R^{25}$ has may be, for example, 1 to 40, 1 to 20, 2 to 15, or 4 to 13. Here, $Z^1$ is a divalent linking group, and may be, for example, a group represented by a covalent bond, -O-, -S-, -C(=O)-, -C(=O)O-, -OC(=O)-, -C(=O)$NR^{38}$-, or -$NR^{39}$C(=O)-. When $Z^1$ is a covalent bond, -O-, -S-, -C(=O)-, -C(=O)O-, or -OC(=O)-, $R^{29}$ is a hydrogen atom or a monovalent organic group. When $Z^1$ is - C(=O)$NR^{38}$-, $R^{29}$ and $R^{38}$ are each a hydrogen atom or a monovalent organic group, or $R^{29}$ forms a ring together with $R^{38}$. When the divalent linking group $Z^1$ is -$NR^{39}$C(=O)-, $R^{29}$ and $R^{39}$ are each a hydrogen atom or a monovalent organic group, or $R^{29}$ forms a ring together with $R^{39}$. The monovalent organic group as $R^{29}$, $R^{38}$, and $R^{39}$ may have, for example, 1 to 20, or 1 to 10 organic groups. When $R^{38}$ is a monovalent organic group, it may be a monovalent hydrocarbon group having 1 to 20 carbon atoms. When $Z^1$ is a covalent bond or -C(=O)O-, $R^{29}$ may be a hydrogen atom or a monovalent hydrocarbon group having 1 to 20 carbon atoms. When $Z^1$ is a covalent bond and $R^{29}$ is a hydrocarbon group, the hydrocarbon group may be an aliphatic hydrocarbon group. In addition, $R^{29}$ may be a monovalent organic group other than a hydrocarbon group, or a hydrocarbon group having a ring structure, or an aromatic hydrocarbon group. When $Z^1$ is -O-, it may be a monovalent organic group other than a group represented by W-H where W is an alkyl ether. When $R^{26}$ to $R^{28}$ are monovalent organic groups, examples of the monovalent organic group include the same as those exemplified for $R^{25}$.

In a group having an aromatic ring (for example, the aromatic hydrocarbon group), a monovalent substituent may be bonded to the aromatic ring. Examples of the monovalent substituent include a monovalent organic group, and examples of the monovalent organic group include a substituted or unsubstituted hydrocarbon group, a group represented by the formula: $-R^{61}-(W^1-R^{62})_n-W^2R^{63}$, and the like. The group represented by the formula: $-R^{61}-(W^1-R^{62})n-W^2R^{63}$ may be bonded to a para-position of a benzene ring. $W^1$ may be a divalent group such as -O-, -S-, -C(=O)-, or -C(=O)O-, and may be -O-. $W^2$ may be a divalent group such as -O-, -S-, -C(=O)-, or -C(=O)O-, and may be -O-.

In the monovalent organic group, $R^{61}$ is a covalent bond or a divalent organic group. The divalent organic group may be a divalent hydrocarbon group. The number of carbon atoms that the divalent hydrocarbon group has may be, for example, 1 to 8, 1 to 5, or 1 to 3. A hydrogen atom bonded to the divalent hydrocarbon group may be substituted by a substituent such as a monovalent substituent (that is, it may be a substituted hydrocarbon group). Examples of the substituent include a halogen atom such as a fluorine atom. Specific examples of the divalent hydrocarbon group may include a methylene group, an ethylene group, a 1,2-propylene group, a 1,3-propylene group, or a group in which a part or all of the hydrogen atoms thereof are substituted with a halogen atom such as a fluorine atom, and may be a methylene group.

In the monovalent organic group, $R^{62}$ is a divalent organic group, and may be a divalent hydrocarbon group. The number of carbon atoms that the divalent hydrocarbon group has may be, for example, 1 to 8, 1 to 5, or 1 to 3. A hydrogen atom bonded to the divalent hydrocarbon group may be substituted by a substituent such as a monovalent substituent (that is, it may be a substituted hydrocarbon group). Examples of the substituent include a halogen atom such as a fluorine atom. Specific examples of the divalent hydrocarbon group may include a methylene group, an ethylene group, a 1,2-propylene group, a 1,3-propylene group, or a group in which a part or all of the hydrogen atoms thereof are substituted with a halogen atom such as a fluorine atom, and may be an ethylene group. n may be, for example, 1 to 10, 1 to 5, or 1 to 3. n may be an integer, or may be a rational number (for example, when n is an average value over the structural units (C) that the polymer (A) or (B) has). When there are a plurality of $R^{62}$s in one structural unit, they may be different or the same.

In the monovalent organic group, $R^{63}$ may be a hydrogen atom or a monovalent hydrocarbon group. The number of carbon atoms that the monovalent hydrocarbon group has may be, for example, 1 to 8, 1 to 5, or 1 to 3. A hydrogen atom bonded to the monovalent hydrocarbon group may be substituted by a substituent such as a monovalent substituent (that is, it may be a substituted hydrocarbon group). Examples of the substituent include a halogen atom such as a fluorine atom. Specific examples of the monovalent hydrocarbon group may include a methyl group, an ethyl group, an isopropyl group, an n-propyl group, or a group in which a part or all of the hydrogen atoms thereof are substituted with a halogen atom such

as a fluorine atom, and may be a methyl group.

When the polymer (A) includes a structural unit (C), the structural unit (C) may include at least one type of structural unit derived from a monomer represented by the following formula (C1).

[Chem. 11]

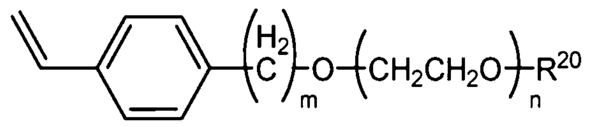

(C 1)

(In the formula, m is 0 to 4, and n is 0 to 10. $R^{20}$ may be a hydrogen atom or an alkyl group having 1 to 4 carbon atoms. The alkyl group may be a methyl group or an ethyl group, and may be a methyl group.)

In formula (C1), m may be, for example, 1 to 3, 1 to 2, or 1. m may be an integer, or may be an average value over the entire structural units derived from the monomer represented by formula (C1) included in the polymer (A) or (B) (in this case, m is a rational number). In formula (C1), n may be, for example, 1 to 4, or 1 to 3. n may be an integer, or may be an average value over the entire structural units derived from the monomer represented by formula (C1) included in the polymer (A) or (B) (in this case, n is a rational number).

When the polymer (A) has a structural unit (C), and when one of $R^{26}$ and $R^{27}$ forms a ring together with $R^{28}$ in the structural unit (C), the ring members of the ring may be, for example, 4 to 10, 4 to 8, or 5 to 7. The structural unit (C) may be the following structural unit (C2).

[Chem. 12]

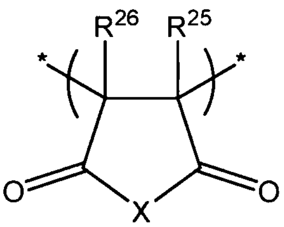

(C2)

(In formula (C2), X is an oxygen atom or a tertiary amino group represented by $-NR^{24}-$, $R^{24}$ is a monovalent organic group, and $R^{25}$ and $R^{26}$ are each independently a hydrogen atom or a monovalent substituent.)

In formula (C2), the number of carbon atoms that $R^{24}$ has may be, for example, 1 to 20, 1 to 15, or 2 to 10. $R^{24}$ may be a hydrocarbon group or a hydrocarbon group substituted with fluorine, and may be an ethyl group, a 2,2,2-trifluoroethyl group, an n-dodecyl group, a cyclohexyl group, or a benzyl group.

A ratio of the structural unit (A) to all structural units included in the polymer (A) may be, for example, 0.2 to 0.95, 0.2 to 0.8, 0.3 to 0.7, or 0.4 to 0.6.

A ratio of the structural unit (C) to all structural units included in the polymer (A) may be, for example, 0.05 to 0.8, 0.2 to 0.8, 0.3 to 0.7, or 0.4 to 0.6. The ratio of the structural unit (C) to all structural units included in the polymer (A) may be, for example, 0.8 or less, 0.7 or less, 0.6 or less, or 0.3 or less.

A total ratio of the structural unit (A) and the structural unit (C) to all structural units included in the polymer (A) may be, for example, 0.5 or more, 0.6 or more, 0.7 or more, 0.8 or more, 0.9 or more, or 0.95 or more. The total ratio of the structural unit (A) and the structural unit (C) to all structural units included in the polymer (A) may be, for example, less than 1.0, or 0.97 or less. The total ratio of the structural unit (A) and the structural unit (C) to all structural units included in the polymer (A) may be, for example, 0.5 or more and less than 1.0, or 0.5 to 0.97.

A content of the structural unit (A) with respect to a total mass of the polymer (A) may be, for example, 25 to 95% by mass, 40 to 90% by mass, or 50 to 90% by mass.

A content of the structural unit (C) with respect to a total mass of the polymer (A) may be, for example, 5 to 75% by mass, 10 to 60% by mass, or 10 to 50% by mass. The content of the structural unit (C) with respect to the total mass of the polymer (A) may be, for example, 75% by mass or less, 60% by mass or less, 50% by mass or less, or 25% by mass or less.

A total content of the structural unit (A) and the structural unit (C) with respect to a total mass of the polymer (A) may be, for example, 90% by mass or more, 95% by mass or more, or 98% by mass or more. The total content of the structural unit (A) and the structural unit (C) with respect to the total mass of the polymer (A) may be, for example, 100% by

mass or less, less than 100% by mass, or 99% by mass or less. The total content of the structural unit (A) and the structural unit (C) with respect to the total mass of the polymer (A) may be, for example, 90 to 100% by mass.

When the polymer (A) includes a structural unit (B), a molar ratio m of the structural unit (B) to all structural units included in the polymer (A) may be, for example, 0.2 to 0.8, 0.25 to 0.75, 0.3 to 0.7, 0.35 to 0.65, or 0.4 to 0.6. A content of the structural unit (B) with respect to a total mass of the polymer (A) may be, for example, greater than 10% by mass and 95% by mass or less, 15 to 95% by mass, 20 to 80% by mass, 25 to 60% by mass, or 30 to 45% by mass.

A number average molecular weight (Mn) of the polymer (A) may be, for example, 5,000 to 400,000, 8,000 to 200,000, 10,000 to 150,000, or 10,000 to 100,000. A weight average molecular weight (Mw) of the polymer (A) may be, for example, 5,000 to 600,000, 10,000 to 450,000, 20,000 to 200,000, or 20,000 to 100,000. A molecular weight distribution (Mw/Mn) of the polymer (A) may be, for example, 1.0 to 5.0, 1.2 to 3.0, or 1.3 to 2.5. The number average molecular weight and the weight average molecular weight of the polymer (A) can be measured, for example, by gel permeation chromatography.

The polymer (A) may be one that does not hydrolyze in air. Not hydrolyzing is judged by the following criteria. First, $^1$H-NMR measurement is performed on a solution obtained by dissolving the polymer (A) in a deuterated solvent. After that, after storing the solution under the atmosphere for 7 days (for example, storing at a temperature in a range of 25°C $\pm$ 10°C and a humidity (which may be a relative humidity) of 65 $\pm$ 20%), $^1$H-NMR measurement is performed again, and when a ratio of protonated anionic functional groups by hydrolysis to alkali-metallized anionic functional groups before storage is less than 10%, it is defined as a "non-hydrolyzing" polymer. The ratio of the protonated anionic functional groups may be, for example, 5% or less, or 1% or less.

A content of the polymer (A) in the electrolyte composition may be, for example, 1 to 80% by mass, 3 to 70% by mass, 5 to 60% by mass, or 10 to 40% by mass, with respect to a total amount of an electrolyte composition part.

A method for producing the polymer (A) or (B) is not particularly limited, but for example, it can be produced by performing radical addition polymerization on a corresponding monomer.

< Ionic Compound>

The ionic compound is not particularly limited, but examples thereof include an alkali metal salt, a compound having an organic cation, and the like. The electrolyte composition may include at least one of an alkali metal salt and a compound having an organic cation.

The ionic compound is preferably a compound where B $\leq$ A, and more preferably B < A, where A is a Raman shift derived from an anion constituting the ionic compound in a Raman spectrum obtained by Raman spectroscopy for the ionic compound, and B is a Raman shift derived from an anion constituting the ionic compound in a Raman spectrum obtained by Raman spectroscopy for the electrolyte composition. B < A means that a Raman shift of the ionic compound is shifted to a lower wavenumber side (longer wavelength side) in the electrolyte composition, which means that a so-called red-shift has occurred. The occurrence of a red-shift corresponds to a weak interaction between an anion portion of the ionic compound and an alkali metal ion (for example, $Li^+$), and therefore, by using an ionic compound that causes such a red-shift in the electrolyte composition, movement of the alkali metal ion can be made easier.

A difference between the B and the A (a value of A-B) is 0.0 or more, but may be, for example, 0.1 or more, 0.2 or more, or 0.3 or more. The value of A-B may also be, for example, 20.0 or less, 15.0 or less, 10.0 or less, 9.5 or less, 9.0 or less, 7.0 or less, 5.0 or less, 4.0 or less, 3.0 or less, 2.0 or less, 1.0 or less, 0.9 or less, 0.8 or less, 0.7 or less, 0.6 or less, 0.5 or less, or 0.4 or less. The value of A-B may be, for example, 0.1 to 20.0.

A Raman shift in the present specification means a value determined from a Raman spectrum obtained by performing Raman spectroscopy using a laser with a wavelength of 785 nm. For Raman spectroscopy, for example, a Raman spectroscopic analyzer (device name: DXR3) manufactured by Thermo Fisher Scientific Inc. or the like can be used. The Raman shift A and the Raman shift B are peaks corresponding to a bending vibration of the ionic compound. The Raman shift corresponds to an anion part in the ionic compound, and when the anion is $PF_6$-, it corresponds to a bending vibration of F-P-F, when it is TFSI- or FSI-, it corresponds to a bending vibration of S-N-S, when it is OTf-, it corresponds to a bending vibration of C-S-O, and when it is $N(CN)_2$-, it corresponds to a bending vibration of C-N-C.

Examples of the alkali metal salt include MF, MCl, MBr, MI, $MNO_3$, $MClO_4$, $MPF_6$, $MBF_4$, $M_2SO_4$, $M[(C_hF_{2h+1})SO_3]$ (h is 0 to 3), $M[(C_hF_{2h+1})SO_2]_2N$ (h is 0 to 3), $M\{[(C_hF_{2h+1})SO_2]N[(C_iF_{2i+1})SO_2]\}$ (h, i are 0 to 3), MBOB (BOB is bis(oxalato)borate), and the like, where M is an alkali metal. One or more types of alkali metal salts may be used. M is not particularly limited as long as it is an alkali metal, but may include lithium, sodium, or potassium, may include lithium or sodium, and may include potassium. An alkali metal element included in the alkali metal salt may be the same alkali metal element as an alkali metal element that the structural unit (A) has.

A content of the alkali metal salt in the electrolyte composition may be, for example, 0.1 to 200 mol%, 2.5 to 150 mol%, 5 to 100 mol%, or 10 to 60 mol%, in terms of alkali metal ions included in the alkali metal salt, with respect to a total amount of the structural unit (A) that the polymer (A) has.

A compound having an organic cation may be an ionic liquid. A formal charge of the organic cation may be

monovalent, but may be divalent or more. Examples of the compound having an organic cation include an imidazolium salt, a pyrrolidinium salt, a piperidinium salt, a pyridinium salt, a quaternary ammonium salt, a quaternary phosphonium salt, and the like. An anion that the compound having an organic cation has is not particularly limited, and examples thereof include $Cl^-$, $Br^-$, $I^-$, $ClO_4^-$, $PF_6^-$, $BF_4^-$, $CF_3SO_3^-$, $(FSO_2)_2N^-$, $(CF_3SO_2)_2N^-$, $(CrF_{2r+1}SO_2)_2N^-$ (r is an integer of 2 or more), $HSO_3^-$, and the like, and from the viewpoint of electrochemical stability, it may be $PF_6^-$, $BF_4^-$, $CF_3SO_3^-$, $(FSO_2)_2N^-$, $(CF_3SO_2)_2N^-$, or $(C_mF_{2m+1}SO_2)_2N^-$, may be $(FSO_2)_2N^-$ or $(CF_3SO_2)_2N^-$, and may be $(CF_3SO_2)_2N^-$. The ionic liquid may be a liquid at 25°C.

Examples of a pyrrolidinium cation that a pyrrolidinium salt has include the following.

[Chem. 13]

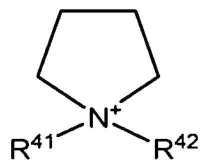

In the above formula, $R^{41}$ and $R^{42}$ are each independently a monovalent organic group, and the organic group preferably has 1 to 15 carbon atoms. Examples of the monovalent organic group include an alkyl group having 1 to 15 carbon atoms such as a butyl group, or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3).

The group represented by the formula: $-A^1-O-(A^2-O)_k-A^3$ is preferably a group having 1 to 10 carbon atoms, and more preferably a - $CH_3OCH_2CH_2OCH_3$ group or $-CH_2CH_2-O-CH_3$. $R^{41}$ is an alkyl group having 1 to 3 carbon atoms, and may be a methyl group. $R^{41}$ and $R^{42}$ may be the same or different. Note that hydrogen bonded to a carbon atom constituting a pyrrolidine ring may be substituted with a substituent.

Examples of a piperidinium cation that a piperidinium salt has include the following.

[Chem. 14]

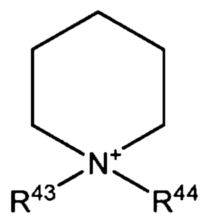

In the above formula, $R^{43}$ and $R^{44}$ are each independently a monovalent organic group, and the organic group preferably has 1 to 15 carbon atoms. Examples of the monovalent organic group include an alkyl group having 1 to 15 carbon atoms or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3).

The alkyl group of $R^{44}$ is more preferably an alkyl group having 2 to 6 carbon atoms such as a butyl group. The group represented by the formula: $-A^1-O-(A^2-O)_k-A^3$ is preferably a group having 1 to 10 carbon atoms, and more preferably a $-CH_3OCH_2CH_2OCH_3$ group or $-CH_2CH_2-O-CH_3$. $R^{43}$ is an alkyl group having 1 to 3 carbon atoms, and may be a methyl group. $R^{43}$ and $R^{44}$ may be the same or different. Note that hydrogen bonded to a carbon atom constituting a piperidine ring may be substituted with a substituent.

Examples of an imidazolium cation that an imidazolium salt has include the following.

[Chem. 15]

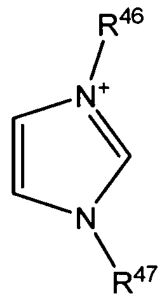

In the above formula, $R^{46}$ and $R^{47}$ are each independently a monovalent organic group, and the organic group preferably has 1 to 15 carbon atoms. Examples of the monovalent organic group include an alkyl group having 1 to 15 carbon atoms or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3).

In the above formula, the alkyl group of $R^{47}$ is preferably an alkyl group having 2 to 6 carbon atoms such as a butyl group. The group represented by the formula: $-A^1-O-(A^2-O)_k-A^3$ is preferably a group having 1 to 10 carbon atoms, and more preferably a - $CH_3OCH_2CH_2OCH_3$ group or $-CH_2CH_2-O-CH_3$. $R^{46}$ is an alkyl group having 1 to 3 carbon atoms, and may be a methyl group. $R^{46}$ and $R^{47}$ may be the same or different. Note that hydrogen bonded to a carbon atom constituting an imidazole ring may be substituted with a substituent.

Examples of an ammonium cation that a quaternary ammonium salt has include the following.

[Chem. 16]

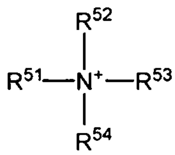

In the above formula, $R^{51}$ to $R^{54}$ are each independently a monovalent organic group, and the organic group preferably has 1 to 15 carbon atoms. The monovalent organic group is preferably an alkyl group having 1 to 15 carbon atoms or a group represented by the formula: $-A^1-O-(A^2-O)_k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3). $R^{51}$ to $R^{54}$ may all be the same, but may be two or more different groups. For example, it is preferable that $R^{51}$ is an alkyl group having 1 to 10 carbon atoms, and $R^{52}$ to $R^{54}$ are alkyl groups having 1 to 3 carbon atoms, and it is more preferable that $R^{51}$ is an alkyl group having 3 to 8 carbon atoms such as a butyl group, and $R^{52}$ to $R^{54}$ are a methyl group or an ethyl group. The group represented by the formula: $-A^1-O-(A^2-O)_k-A^3$ is preferably a group having 1 to 10 carbon atoms, and more preferably a - $CH_3OCH_2CH_2OCH_3$ group or $-CH_2CH_2-O-CH_3$.

Examples of a phosphonium cation that a quaternary phosphonium salt has include the following.

[Chem. 17]

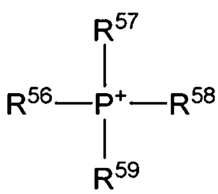

In the above formula, $R^{56}$ to $R^{59}$ are each independently a monovalent organic group, and the organic group preferably has 1 to 15 carbon atoms. The monovalent organic group is preferably an alkyl group having 1 to 15 carbon atoms or a group represented by the formula: $-A^1-O-(A^2-O)k-A^3$ ($A^1$ is an alkylene group having 1 or 2 carbon atoms, $A^2$ is an alkylene group having 2 or 3 carbon atoms, $A^3$ is an alkyl group having 1 to 3 carbon atoms, and k is 0 to 3). $R^{56}$ to $R^{59}$ may all be the same, but may be two or more different groups. For example, it is preferable that $R^{56}$ is an alkyl group having 1 to 10 carbon atoms, and $R^{57}$ to $R^{59}$ are alkyl groups having 1 to 3 carbon atoms, and it is more preferable that $R^{56}$ is an

alkyl group having 3 to 8 carbon atoms such as a pentyl group, and $R^{57}$ to $R^{59}$ are a methyl group or an ethyl group.)

The compound having an organic cation may include one or more organic cations selected from the group consisting of a 1-ethyl-1-methylpyrrolidinium cation, a 1-n-propyl-1-methylpyrrolidinium cation, a 1-n-butyl-1-methylpyrrolidinium cation, a 1-n-propyl-1-methylpiperidinium cation, a 1-n-butyl-1-methylpiperidinium cation, a 1-ethyl-3-methylimidazolium cation, a butyltrimethylammonium cation, and a triethylpentylphosphonium cation. The compound having an organic cation may include one or more anions selected from the group consisting of a hexafluorophosphate anion, a bis(fluorosulfonyl)imide anion, a bis(trifluoromethanesulfonyl)imide anion, and a trifluoromethanesulfonate anion.

Specific examples of the compound having an organic cation include 1-(2-methoxyethoxymethyl)-1-methylpyrrolidinium bis(trifluoromethanesulfonyl)imide, 1-ethyl-3-methylimidazolium bis(trifluoromethanesulfonyl)imide, 1-ethyl-3-methylimidazolium tetrafluoroborate, 1-n-butyl-1-methylpyrrolidinium hexafluorophosphate, 1-n-propyl-1-methylpyrrolidinium bis(fluorosulfonyl)imide, 1-n-propyl-1-methylpyrrolidinium bis(trifluoromethanesulfonyl)imide, 1-n-butyl-1-methylpyrrolidinium bis(fluorosulfonyl)imide, 1-ethyl-1-methylpyrrolidinium bis(trifluoromethylsulfonyl)imide, 1-n-propyl-1-methylpiperidinium bis(fluorosulfonyl)imide, 1-n-propyl-1-methylpiperidinium bis(trifluoromethanesulfonyl)imide, 1-n-butyl-1-methylpyrrolidinium bis(trifluoromethanesulfonyl)imide, 1-n-butyl-1-methylpyrrolidinium trifluoromethanesulfonic acid, 1-n-butyl-1-methylpyrrolidinium bis(trifluoromethylsulfonyl)imide, triethyl-n-pentylphosphonium bis(trifluoromethanesulfonyl)imide, n-butyltrimethylammonium bis(trifluoromethanesulfonyl)imide, and the like.

A content of the compound having an organic cation in the electrolyte composition may be, for example, 5 to 400 parts by mole, 10 to 300 parts by mole, or 20 to 250 parts by mole, with respect to 100 parts by mole of the structural unit (A) that the polymer (A) has.

< Non-ionic Organic Solvent>

Examples of the non-ionic organic solvent include an aprotic solvent. The non-ionic organic solvent may include one or more organic solvents selected from the group consisting of a carbonate-based solvent, an ether-based solvent, a fluorine-based solvent, a nitrile-based solvent, a lactone-based solvent, a phosphate ester-based solvent, and a sulfone-based solvent, and may include a phosphate ester. The non-ionic organic solvent may include one or more solvents selected from the group consisting of a carbonate-based solvent, an ether-based solvent, a fluorine-based solvent, a nitrile-based solvent, and a phosphate ester-based solvent, and may include a carbonate-based solvent. In the electrolyte composition, the polymer (A) may be swollen by the organic solvent.

Examples of the carbonate-based solvent include linear carbonates such as dimethyl carbonate, diethyl carbonate, and ethyl methyl carbonate; and cyclic carbonates such as ethylene carbonate, propylene carbonate, butylene carbonate, and vinylene carbonate. The organic solvent may be a mixed solvent including two or more types of carbonate-based solvents, and may be a mixed solvent including one or more types of cyclic carbonate-based solvents and one or more types of linear carbonate-based solvents, or a mixed solvent including two or more types of cyclic carbonate-based solvents.

Examples of the ether-based solvent include cyclic ethers such as tetrahydrofuran, 2-methyltetrahydrofuran, tetrahydropyran, and 1,3-dioxolane; and linear ethers such as 1,2-diethoxyethane and ethoxymethoxyethane.

Examples of the fluorine-based solvent include hydrofluorocarbons such as perfluorooctane; hydrofluoroethers such as methyl nonafluorobutyl ether and ethyl nonafluorobutyl ether; hydrofluoroolefins such as 1,3,3,3-tetrafluoropropene; and 2,2,2-trifluoro-N,N-dimethylacetamide.

Examples of the phosphate ester include trimethyl phosphate (TMP), triethyl phosphate (TEP), and tris(2,2,2-trifluoroethyl) phosphate (TFEP).

Examples of the nitrile-based solvent include acetonitrile, succinonitrile, and the like. Examples of the lactone-based solvent include $\gamma$-butyrolactone and the like.

Other examples of the non-ionic organic solvent include sulfone-based solvents such as sulfolane and 3-methylsulfolane; solvents having a sulfonyl group such as dimethyl sulfoxide (DMSO); amide-based solvents such as dimethylformamide (DMF) and dimethylacetamide (DMA); organic solvents having a carbonyl group such as acetone (-C(=O)-, referring to carbonyl compounds other than amide compounds such as esters, ketones, and aldehydes); and nitrogen-containing aromatic compounds such as pyridine (compounds containing nitrogen as a ring member of an aromatic ring, which may be either a monocyclic system or a condensed ring system). The organic solvent may be used as one type only, or as a mixed solvent including two or more types of organic solvents.

A content of the organic solvent in the electrolyte composition may be, for example, 10 to 1000 parts by mass, 50 to 800 parts by mass, 100 to 600 parts by mass, 150 to 500 parts by mass, or 200 to 400 parts by mass, with respect to 100 parts by mass of the polymer (A) included in the electrolyte composition.

A transference number of the alkali metal ion of the electrolyte composition may be, for example, 0.5 or more, 0.6 or more, or 0.7 or more. The transference number of the alkali metal ion of the electrolyte composition may be, for example, 0.9 or less, or 0.87 or less. The transference number of the alkali metal ion of the electrolyte composition may be, for example, 0.5 to 0.9. The transference number may be a transference number measured at room temperature (25°C).

The electrolyte composition may further include other resins such as a fluorine-based resin (a binder resin, a resin other than the polymers (A) and (B)), a fabric such as a non-woven fabric, a porous material, a viscosity modifier, an anion receptor, and the like. The electrolyte composition may include, as the fluorine-based resin, a resin having a carbon chain as a main chain. The carbon chain may be one formed by radical polymerization of an ethylenically unsaturated group. Examples of the fluorine resin include poly(vinylidene fluoride-co-hexafluoropropylene) (PVDF-HFP), polyvinylidene fluoride (PVDF), and the like. The porous material may be a resin-made porous material. Specific examples thereof include a porous polyolefin film, a porous ceramic film, and the like. A content of the other resin may be, for example, 1 to 200 parts by mass, 5 to 150 parts by mass, 10 to 100 parts by mass, or 10 to 80 parts by mass, with respect to 100 parts by mass of the polymer (A).

The anion receptor is not particularly limited. A formula weight (molecular weight) of the anion receptor may be, for example, 1000 or less, 800 or less, or 500 or less. The formula weight (molecular weight) of the anion receptor may be, for example, 200 or more, 300 or more, or 400 or more. The formula weight (molecular weight) of the anion receptor may be, for example, 200 to 1000, or 400 to 500. The anion receptor may be one having Lewis acidity. In this case, the anion receptor can capture an anion by accepting a non-covalent electron pair of the anion and forming an acid-base complex. Examples of such a compound include a compound having an electron-deficient atom. Note that an electron-deficient atom refers to an atom that is covalently bonded to another atom but whose outermost shell electrons are less than 8. Examples of the electron-deficient atom include an atom belonging to Group 13 of the periodic table, and more specifically, may be at least one of an aluminum atom and a boron atom, and may be a boron atom.

Examples of the anion receptor having a boron atom include a boron compound that functions as a Lewis acid, and may be diborane, a compound represented by the following chemical formulas IA to IE, and the like.

[Chem. 18]

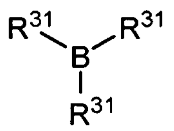

IA

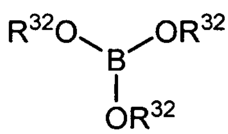

IB

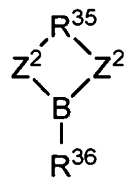

IC

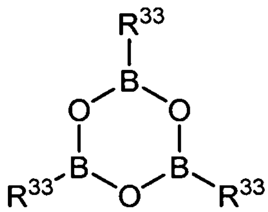

ID

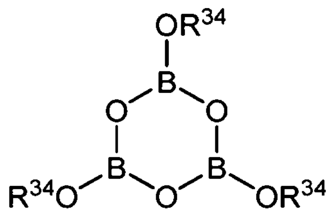

IE

In formulas IA and ID, $R^{31}$ and $R^{33}$ are each a halogen atom or a monovalent organic group. The halogen atom may be a fluorine atom or a chlorine atom, and may be a fluorine atom. The number of carbon atoms that the monovalent organic group has may be, for example, 1 to 20, 1 to 15, 2 to 10, or 2 to 6. Here, the monovalent organic group is bonded to the boron atom (B) in formula IA or ID by a carbon atom that the monovalent organic group has. The monovalent organic group may be a hydrocarbon group or a halogen-substituted hydrocarbon group, and the halogen-substituted hydrocarbon group may be a partially or fully fluorinated hydrocarbon group. In one molecule, a plurality of $R^{31}$s and $R^{33}$s may be different from each other or all the same.

In formulas IB and IE, $R^{32}$ and $R^{34}$ are each a hydrogen atom or a monovalent organic group. The halogen atom may be a fluorine atom or a chlorine atom, and may be a fluorine atom. The number of carbon atoms that the monovalent organic group has may be, for example, 1 to 20, 1 to 15, 2 to 10, or 2 to 6. Here, the monovalent organic group is bonded to the oxygen atom (O) in formula IB or IE by a carbon atom that the monovalent organic group has. The monovalent organic

group may be a hydrocarbon group or a halogen-substituted hydrocarbon group, and the halogen-substituted hydrocarbon group may be a partially or fully fluorinated hydrocarbon group. In one molecule, a plurality of $R^{32}$s and $R^{34}$s may be different from each other or all the same.

In formula IC, $R^{35}$ is a divalent organic group, and $Z^2$ is a covalent bond or an oxygen atom. The number of carbon atoms that the divalent organic group has may be, for example, 1 to 15, 2 to 10, or 3 to 8. $R^{35}$, the two $Z^2$s, and the boron atom (B) form a ring, and the ring members of the ring may be, for example, 4 to 8, 5, or 6. Here, when $Z^2$ is an oxygen atom, the divalent organic group is bonded to $Z^2$ in formula IC by a carbon atom that the divalent organic group has, and when $Z^2$ is a covalent bond, the divalent organic group is bonded to the boron atom (B) in formula IC by a carbon atom that the divalent organic group has. The divalent organic group may be a hydrocarbon group or a halogen-substituted hydrocarbon group, and the halogen-substituted hydrocarbon group may be a partially or fully fluorinated hydrocarbon group. In one molecule, a plurality of $Z^2$s may be different from each other or all the same.

In formula IC, $R^{36}$ is a hydrogen atom or a monovalent organic group. The monovalent organic group may be a group that bonds to the boron atom (B) in formula IC by a carbon atom that the monovalent organic group has, but may be a group represented by $-OR^{37}$. $R^{37}$ is a hydrogen atom or a monovalent organic group. The monovalent organic group as $R^{37}$ is bonded to the oxygen atom of $-OR^{37}$ by a carbon atom that the monovalent organic group has. The number of carbon atoms that the monovalent organic group as $R^{36}$ or $R^{37}$ has may be, for example, 1 to 20, 1 to 15, 2 to 10, or 2 to 6. Here, the monovalent organic group is bonded to the boron atom (B) in formula IA by a carbon atom that the monovalent organic group has. The monovalent organic group may be a hydrocarbon group or a halogen-substituted hydrocarbon group, and the halogen-substituted hydrocarbon group may be a partially or fully fluorinated hydrocarbon group.

Specific examples of the boron compound include organic boron compounds such as diborane, boron trifluoride, boric acid, boroxine, trimethylborane, triethylborane, tri-n-propylborane, triisopropylborane, triphenylborane, trimethyl borate, triethyl borate, triphenyl borate, tri-n-propyl borate, triisopropyl borate, 2-methoxy-4,4,5,5-tetramethyl-1,3,2-dioxaborolane, 2-ethoxy-4,4,5,5-tetramethyl-1,3,2-dioxaborolane, 2,4,6-trimethylboroxine, 2,4,6-triethylboroxine, 2,4,6-trivinylboroxine, 2,4,6-trimethoxyboroxine, 2,4,6-trimethoxyboroxine, and triphenylboroxine, and halogen-substituted hydrocarbon groups such as tris(2,2,2-trifluoroethyl) borate, 2,4,6-tris(4-fluorophenyl)boroxine, and 2,4,6-tris(3,4,5-trifluorophenyl)boroxine.

Examples of the anion receptor having an aluminum atom include an aluminum compound that functions as a Lewis acid, and examples thereof include a compound represented by the formula $AlX^1_3$ ($X^1$ is a halogen atom, and may be a fluorine atom) and a compound represented by the formula: $Al(OR^{35})_3$ ($R^{35}$ is a hydrocarbon group, and may be an alkyl group).

In addition, the anion receptor may be an azaether. An azaether is a compound in which -O- of an ether compound is replaced with - $NR^E$- (where $R^E$ is a hydrogen atom or an organic group). The azaether may be either a linear azaether or a cyclic azaether. The azaether may have an electron-withdrawing group, for example, in a hydrocarbon moiety or the like.

A content of the anion receptor in the electrolyte composition may be, for example, 10 to 200 parts by mass, 30 to 180 parts by mass, 50 to 150 parts by mass, or 80 to 130 parts by mass, with respect to 100 parts by mass of the polymer (A).

A method for producing the electrolyte composition is not particularly limited, but it can be obtained by preparing a solution including the polymer (A) and an ionic compound, drying it, and then adding an organic solvent. At this time, it may be a dry film of the electrolyte composition, but it may be dried after being impregnated into a porous material (resin film or the like) such as a separator.

The electrolyte composition of the present embodiment can be used as a composition for forming an electrolyte for a battery, a capacitor, or the like. That is, an electrolyte of a battery or the like of the present embodiment may include the electrolyte composition. Examples of the battery include a battery that performs charging and discharging by movement of alkali metal ions, such as a lithium-ion battery and a sodium-ion battery. The battery may be a primary battery or a secondary battery, and may be a solid-state battery. The electrolyte composition of the present embodiment may be used as an electrode material, and may be included in at least one of a positive electrode and a negative electrode.

The battery of the present embodiment includes a positive electrode, a negative electrode, and an electrolyte disposed between the positive electrode and the negative electrode. The positive electrode may be one in which a layer including a positive electrode material is formed on a current collector. In addition, the negative electrode may be one in which a layer including a negative electrode material is formed on a current collector. Hereinafter, a lithium-ion battery will be described as an example.

A negative electrode of the lithium-ion battery is not particularly limited, and may include a negative electrode active material, and may include a conductive auxiliary agent, a binder, and the like as necessary. For example, examples of the negative electrode active material include simple substances of elements such as Li, Si, P, Sn, Si-Mn, Si-Co, Si-Ni, In, and Au, and alloys or composites including these elements, carbon materials such as graphite, substances in which lithium ions are inserted between layers of the carbon material, and oxides including titanium.

A positive electrode of the lithium-ion battery is not particularly limited, and may include a positive electrode active substance, and may include a conductive auxiliary agent, a binder, and the like as necessary. The positive electrode active

substance is not particularly limited, and examples thereof include a lithium composite metal oxide including lithium and a transition metal element. The transition metal element may be at least one selected from the group consisting of V, Cr, Mn, Fe, Co, Ni, Cu, and Al, and may include Ni.

Examples of the lithium composite metal oxide include $LiCoO_2$, $LiNiO_2$, $LiMn_2O_4$, $LiNi_{0.5}Mn_{1.5}O_4$, $Li_2MnO_3$, $LiNi_xMn_yCo_{1-x-y}O_2$ [0 < x+y < 1]), $LiNi_xCo_yAl_{1-x-y}O_2$ [0 < x+y < 1]), $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$. When the positive electrode active substance includes an alkali metal element other than Li, specific examples thereof include those in which Li in the above specific examples is replaced with another alkali metal.

The negative electrode (negative electrode material) and the positive electrode (positive electrode material) of the present embodiment may further include a solid electrolyte material, a binder resin (binder), a conductive auxiliary agent, and the like.

The battery may have a separator. The separator may be a porous material, and may be a resin-made porous material. Specific examples thereof include a porous polyolefin film, a porous ceramic film, and the like.

## EXAMPLES

< Production of Copolymer>

A lithiated carboxyl group-containing copolymer was produced by the following method.

Saccharin methacrylamide (SacM) (1.8848 g, 7.5 mmol), styrene (St) (0.86 mL, 7.5 mmol), tetralin (0.15 mL), and azobisisobutyronitrile (24.7 mg, 0.15 mmol) were dissolved in a mixed solvent of dioxane and acetonitrile (dioxane:acetonitrile = 1:1 (volume ratio)) (12.1 mL), and stirred at 60°C for 24 hours to obtain a solution of a copolymer of saccharin methacrylamide and styrene (raw material copolymer).

Next, a 25 mM phenothiazine 1,4-dioxane solution (45.0 mL, 1.13 mmol) and 100 equivalents of water were added to the obtained polymerization solution and stirred overnight. Hereby, a structural unit derived from saccharin methacrylamide in the raw material copolymer was hydrolyzed, an amide bond including a saccharin moiety was converted to a -COOH group (that is, a structural unit derived from saccharin methacrylamide was converted to a methacrylic acid (MAA) unit), and a -COOH group-containing copolymer was obtained (0.61 g).

A composition ratio of structural units in the polymer was MAA:St = 48:52 (molar ratio). The composition ratio was calculated by dissolving the polymer in deuterated dimethyl sulfoxide and measuring a $^1$H-NMR spectrum.

Then, the -COOH group-containing copolymer (0.61 g, 3.21 mmol) was dissolved in dimethylformamide (12 mL) to obtain a solution. To the solution, 2.5 equivalents of LiOH (449.1 mg, 18.82 mmol) with respect to an amount of SacM initially charged when producing the raw material copolymer was added, and stirred at room temperature (25°C) for 3 days. Hereby, a copolymer (lithiated carboxyl group-containing copolymer) in which the -COOH group of the -COOH group-containing copolymer was converted to -COOLi was obtained (0.43 g).

When $^1$H-NMR was measured for a solution obtained by dissolving the obtained polymer in a deuterated DMSO solvent, a peak derived from a -COOH group, which was expected to be observed around 12 ppm, was not confirmed. After this solution was left to stand under the atmosphere at room temperature for 7 days, $^1$H-NMR was measured again, but a peak derived from a -COOH group was not confirmed. It was judged that Polymer 1 does not hydrolyze in air.

(Examples 1 to 9 and Comparative Example 1)

A polymer solution was prepared by dissolving 100 parts by mass of the lithiated carboxyl group-containing copolymer, 50 parts by mass of PVdF-HFP, and an ionic compound shown in Table 2 in dimethylformamide. This solution was impregnated onto a polyethylene separator and then dried under reduced pressure at 80°C to obtain a composite film. To this composite film, an organic solvent (a mixed solvent of ethylene carbonate and propylene carbonate (1:1 by volume ratio)) of twice the mass with respect to a weight obtained by subtracting a weight of the PE separator from a weight of the composite film was added to obtain an electrolyte composition.

< Measurement of Lithium Ion Transference Number>

A lithium ion transference number of the electrolyte composition of each Example and Comparative Example was measured by the following method. The results are shown in Table 2.

An evaluation cell of a coin-type lithium battery CR2032 was assembled in a glove box under a dry argon atmosphere. Specifically, each layer was laminated in the following order in the evaluation cell to produce a test laminate.

(Lithium/Electrolyte Composition/Lithium)

The lithium ion transference number measurement method is one introduced in Polymer, 28, 2324 (1987). That is, at room temperature (25°C), 10 mV was applied to the test laminate, an initial current value ($I_0$) and a steady-state current value ($I_{ss}$) were measured, and further, an interface resistance measurement value $R_0$ before voltage application and an interface resistance measurement value $R_{SS}$ after voltage application were obtained by a complex impedance method. Then, the obtained values were introduced into the following formula to obtain a lithium ion transference number ($t_{Li+}$). V in the formula is an applied voltage.

$$t_{Li+} = I_{ss}(V - I_0R_0) / I_0(V - I_{SS}R_{SS})$$

< Measurement of Maximum Direct Current Density>

An evaluation cell of a coin-type battery CR2032 was assembled in a glove box under a dry argon atmosphere. Specifically, each layer was laminated in the following order in the evaluation cell to produce a test laminate.

(Lithium/Electrolyte Composition/Lithium)

A constant current test was performed on the evaluation cell by applying current densities of 100, 200, 300, 400, 500, 600, 700, 800, 900, 1000, 1100, 1200, 1300, 1400, 1500, 1600, 1700, 1800, 1900, and 2000 μA/cm2 alternately in positive and negative directions for 10 cycles each in this order, and the test was terminated when a voltage reached 2 V. A maximum current density that could be flowed before reaching 2 V was defined as a maximum direct current density, and a value of the voltage at that time was determined. The results are shown in Table 2. FIG. 1 and FIG. 2 are diagrams showing results of measurement of a maximum direct current density using the electrolyte compositions of Example 4 and Comparative Example 1, respectively. In FIG. 1 and FIG. 2, a dark-colored curve shows a change in voltage (left vertical axis), and a light-colored curve shows a change in current (right vertical axis). As shown in a portion surrounded by a frame in FIG. 2, an overvoltage became too large, the test could not be performed midway, and a direct current did not flow.

< Measurement of Ionic Conductivity>

An evaluation cell of a coin-type battery CR2032 was assembled in a glove box under a dry argon atmosphere. Specifically, each layer was laminated in the following order in the evaluation cell to produce a test laminate.

(Stainless Steel Plate/Electrolyte Composition/Stainless Steel Plate)

Measurement is performed using an impedance measurement device under conditions of 25°C, a frequency range of 0.1 Hz to 1 MHz, and an applied voltage of 10 mV (vs. open circuit voltage). Ionic conductivity σ can be calculated by the following formula. In the formula, R represents a value of impedance. A represents an area of a sample. t represents a thickness of the sample. The results are shown in Table 2.

$$\sigma\ (S \cdot cm^{-1}) = t\ (cm) / (R\ (\Omega) \times A\ (cm^2))$$

< Measurement of Activation Energy>

Ionic conductivity measurement using the evaluation cell was also performed under conditions of 30, 40, 50, 60, and 70°C, and a change in ionic conductivity with respect to temperature was measured. Activation energy was calculated from a slope of a graph of a common logarithm value of ionic conductivity and an inverse of temperature by an Arrhenius equation (log k = log A - Ea/RT, k: reaction rate constant, A: frequency factor, Ea: activation energy, R: gas constant, T: absolute temperature). The results are shown in Table 2.

Note that abbreviations in Table 2 are as follows.

$P_{14}$FSI: 1-n-butyl-1-methylpyrrolidinium bis(fluorosulfonyl)imide
$P_{14}$TFSI: 1-n-butyl-1-methylpyrrolidinium bis(trifluoromethanesulfonyl)imide
$P_{12}$TFSI: 1-ethyl-1-methylpyrrolidinium bis(trifluoromethanesulfonyl)imide

< Raman Spectrum Measurement of Ionic Compound>

Raman spectrum measurement was performed on representative examples of the ionic compounds and electrolyte compositions used in the Examples and Comparative Examples. In the obtained Raman spectra, a bending vibration of an anion portion was observed, and a value of a Raman shift was determined. Since $P_{14}$FSI was used in Example 4 and $P_{14}$TFSI was used in Example 8, the anion portions are FSI- and TFSI-, respectively, and a Raman shift of a bending vibration of S-N-S was observed. The results are shown in Table 3.

[Table 2]

| No. | Ionic Compound | | Electrochemical Properties | | | | |
|---|---|---|---|---|---|---|---|
| | Type | Content mol parts 1) | σ (mS/cm) | Ea (kJ/mol) | Transfere nce Number | Maximum Direct Current Density [mA/cm$^2$] | Voltage [V] |
| Comparativ e Example 1 | - | - | 7.13 × $10^{-4}$ | 24.0 | 0.76 | 0.10 | 2.00 2) |
| Example 1 | $P_{14}$FSI | 50 | 0.46 | 16.2 | 0.60 | 0.10 | 0.15 |
| Example 2 | $P_{14}$FSI | 100 | 1.29 | 14.4 | 0.57 | 0.30 | 0.13 |
| Example 3 | $P_{14}$FSI | 150 | 2.20 | 10.3 | 0.78 | 0.50 | 0.09 |
| Example 4 | $P_{14}$FSI | 200 | 1.45 | 12.7 | 0.87 | 1.30 | 0.11 |
| Example 5 | $P_{14}$TFSI | 50 | 0.50 | 16.1 | 0.49 | 0.10 | 0.20 |
| Example 6 | $P_{14}$TFSI | 100 | 1.22 | 14.8 | 0.49 | 0.30 | 0.21 |
| Example 7 | $P_{14}$TFSI | 150 | 2.43 | 13.0 | 0.62 | 0.60 | 0.18 |
| Example 8 | $P_{14}$TFSI | 200 | 1.09 | 13.2 | 0.76 | 1.10 | 0.27 |
| Example 9 | $P_{12}$TFSI | 200 | 1.02 | 12.8 | 0.86 | 1.00 | 0.27 |

1) mol parts with respect to 100 mol parts of anionic functional groups that the lithiated carboxyl group-containing copolymer has
2) The accurate value could not be measured because the voltage value exceeded the maximum value (2.0 V) of the measurement range.

[Table 3]

| | Type of Ionic Compound | Raman Shift | | |
|---|---|---|---|---|
| | | Raman Shift A of Ionic Compound Alone [cm$^{-1}$] | Raman Shift B of Ionic Compound in Electrolyte Composition [cm$^{-1}$] | Value of A - B |
| Example 4 | $P_{I4}$FSI | 725.0 | 725.0 ~ 715.8 | 0.0 ~ 9.2 |
| Example 8 | $P_{14}$TFSI | 740.6 | 739.9 | 0.7 |

**Claims**

1. An electrolyte composition, comprising:

   a polymer (A) that has an anionic functional group and an alkali metal ion as a counter cation of the anionic functional group, wherein the dissociation energy between lithium ions and the anionic functional group is 150 kcal/mol or more;
   an ionic compound; and
   a non-ionic organic solvent.

2. The electrolyte composition according to claim 1, wherein a transference number of the alkali metal ion at 25°C is 0.5 or more.

3. The electrolyte composition according to claim 1 or 2, wherein the alkali metal ion includes a lithium ion or a sodium ion.

4. The electrolyte composition according to claim 1 or 2, wherein the non-ionic organic solvent includes one or more solvents selected from the group consisting of a carbonate-based solvent, an ether-based solvent, a fluorine-based solvent, a nitrile-based solvent, a lactone-based solvent, a phosphate ester-based solvent, and a sulfone-based solvent.

5. The electrolyte composition according to claim 1 or 2, wherein the anionic functional group includes one or more groups selected from the group consisting of an alkali-metallized sulfonic acid group and an alkali-metallized carboxylic acid group.

6. The electrolyte composition according to claim 1 or 2, wherein the polymer (A) is one that does not hydrolyze in air.

7. A battery, comprising the electrolyte composition according to claim 1 or 2.

Fig.1

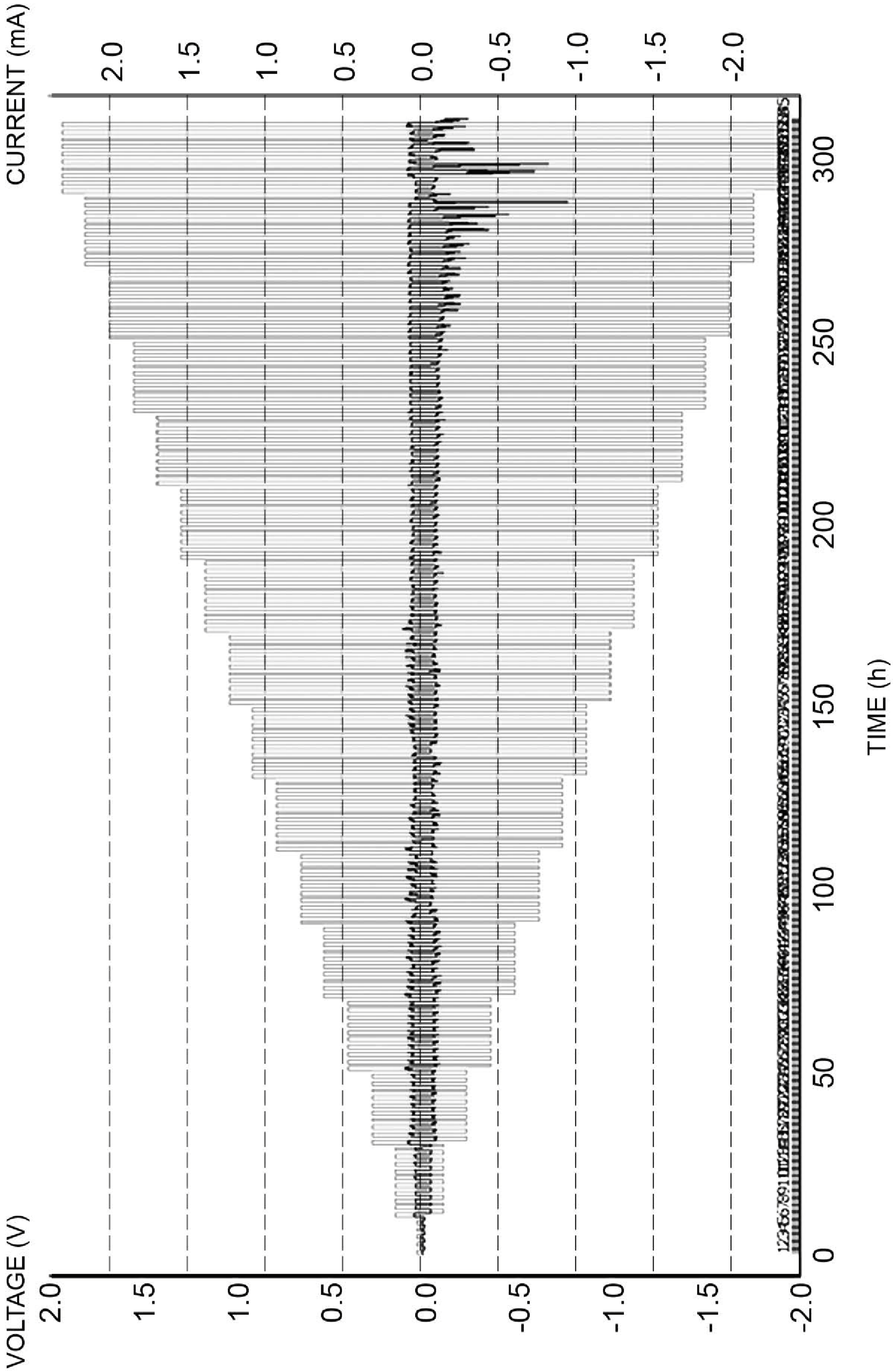
VOLTAGE (V)
2.0
1.5
1.0
0.5
0.0
-0.5
-1.0
-1.5
-2.0
CURRENT (mA)
2.0
1.5
1.0
0.5
0.0
-0.5
-1.0
-1.5
-2.0
0
50
100
150
200
250
300
TIME (h)

Fig.2

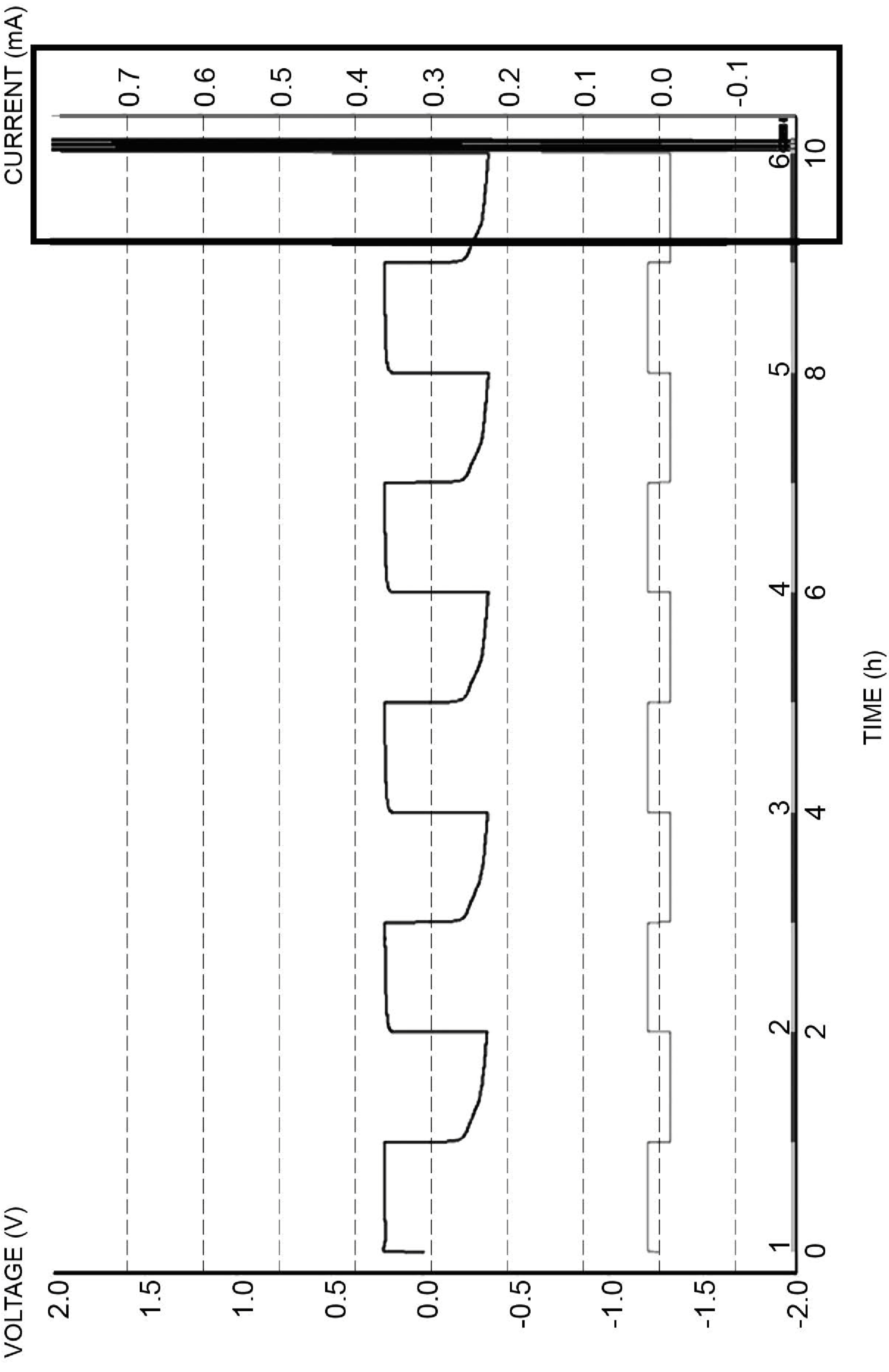
VOLTAGE (V)
2.0
1.5
1.0
0.5
0.0
-0.5
-1.0
-1.5
-2.0
CURRENT (mA)
0.7
0.6
0.5
0.4
0.3
0.2
0.1
0.0
-0.1
0
2
4
6
8
10
1
2
3
4
5
6
TIME (h)

**INTERNATIONAL SEARCH REPORT**

International application No. **PCT/JP2024/031627**

**A. CLASSIFICATION OF SUBJECT MATTER**

***H01M 10/0565***(2010.01)i; ***H01G 11/56***(2013.01)i; ***H01G 11/60***(2013.01)i; ***H01G 11/62***(2013.01)i; ***H01M 6/18***(2006.01)i; ***H01M 10/052***(2010.01)i; ***H01M 10/054***(2010.01)i

FI: H01M10/0565; H01M10/052; H01M10/054; H01G11/60; H01G11/62; H01G11/56; H01M6/18 E

According to International Patent Classification (IPC) or to both national classification and IPC

**B. FIELDS SEARCHED**

Minimum documentation searched (classification system followed by classification symbols)

H01M10/05-10/0587; H01G11/00-11/86; H01M6/00-6/22; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-125134 A (SONY CORPORATION) 15 May 1998 (1998-05-15) paragraphs [0011]-[0024], [0060] | 1-7 |
| X | JP 2012-109217 A (ASAHI KASEI KABUSHIKI KAISHA) 07 June 2012 (2012-06-07) paragraphs [0017]-[0022], [0032]-[0033], [0063], table 2 | 1-7 |
| X | JP 2012-252916 A (ASAHI KASEI KABUSHIKI KAISHA) 20 December 2012 (2012-12-20) paragraphs [0023]-[0027], [0041]-[0043] | 1-7 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/031627**

| Patent document cited in search report | Publication date (day/month/year) | Patent family member(s) | Publication date (day/month/year) |
|---|---|---|---|
| JP 10-125134 A | 15 May 1998 | (Family: none) | |
| JP 2012-109217 A | 07 June 2012 | JP 2012-107219 A | |
| JP 2012-252916 A | 20 December 2012 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007125845 A
- JP 2021088695 A
- US 6022643 A
- US 5705689 A
- US 6120941 A